(19) Europäisches Patentamt
European Patent Office
Office européen des brevets

(11) Veröffentlichungsnummer : **0 312 556 B1**

(12) **EUROPÄISCHE PATENTSCHRIFT**

(45) Veröffentlichungstag der Patentschrift :
**22.01.92 Patentblatt 92/04**

(51) Int. Cl.$^5$ : **B62D 21/18**

(21) Anmeldenummer : **88903164.7**

(22) Anmeldetag : **26.04.88**

(86) Internationale Anmeldenummer :
**PCT/CH88/00082**

(87) Internationale Veröffentlichungsnummer :
**WO 88/08384 03.11.88 Gazette 88/24**

(54) **MEHRZWECKCHASSIS FÜR NUTZ- UND SPEZIALFAHRZEUGE.**

(30) Priorität : **29.04.87 CH 1644/87**

(43) Veröffentlichungstag der Anmeldung :
**26.04.89 Patentblatt 89/17**

(45) Bekanntmachung des Hinweises auf die
Patenterteilung :
**22.01.92 Patentblatt 92/04**

(84) Benannte Vertragsstaaten :
**AT DE FR IT**

(56) Entgegenhaltungen :
**EP-A- 0 001 176**
**DE-C- 874 406**
**GB-A- 1 586 529**
**GB-A- 2 009 680**

(73) Patentinhaber : **BAIKER, Walter**
**Chälenstrasse 2**
**CH-8433 Weiach (CH)**

(72) Erfinder : **BAIKER, Walter**
**Chälenstrasse 2**
**CH-8433 Weiach (CH)**

(74) Vertreter : **Frei, Alexandra Sarah**
**Frei Patentanwaltsbüro Hedwigsteig 6**
**Postfach 95**
**CH-8029 Zürich (CH)**

EP 0 312 556 B1

Jouve, 18, rue Saint-Denis, 75001 PARIS

## Beschreibung

Die Erfindung betrifft ein Mehrzweckchassis gemäss dem Oberbegriff des Patentanspruches 1.

Für Nutz- und Spezialfahrzeuge, wie beispielsweise Waffenträgerfahrzeuge, mobile Radarstationen, mobile Satelliten-Kontrollstationen und Autokräne, die ein grosses Gewicht tragen müssen werden sehr robuste Chassis benötigt. Wenn Aggregate mit einer grossen Bauhöhe zur Verwendung kommen, besteht die Gefahr, dass die Stabilität des Fahrzeuges zu gering ist, wenn dessen Schwerpunkt zu hoch über der Fahrbahn, bzw. dem Gelände, liegt. Aus diesem Grunde besteht das Bedürfnis, möglichst flache Chassis zu verwenden, die ausserdem geeignet sind um mittels speziellen Aufhängungen tief gelagert zu werden. Des weiteren sind solche Fahrzeuge insbesondere beim Einsatz in unebenen Gelände grossen Belastungen ausgesetzt und erfordern demzufolge eine stabile und äusserst robuste Bauweise des Chassis. Dabei treten besonders hohe Belastungen auf, wenn Bodenunebenheiten bei einem kleinen Federweg nur teilweise ausgeglichen werden können. Des weiteren wird für solche Fahrzeuge ein möglichst grosser Radeinschlag gefordert, um die Manövrierbarkeit zu erhöhen.

Die DE-Patentschrift No. 874 406 schlägt für derartige Anwendungen ein Kraftfahrzeug mit einer als Hohlplatte ausgebildeten, verwindungssteifen Ladefläche vor, wobei die Hohlplatte in ihrem Inneren Stege aufweist, die sich in der Längsrichtung der Hohlplatte parallel erstrecken und die die beiden Deckbleche der Hohlplatte gegeneinander abstützen. Die Stege übernehmen gleichzeitig eine tragende und eine stabilisierende Funktion. Der Nachteil einer derartigen Konstruktion besteht darin, dass Belastungen, die hauptsächlich im Bereiche der Mitte der Ladefläche erfolgen, nicht optimal auf die Achsaufhängungen übertragen werden.

Es ist nun die Aufgabe der Erfindung, ein Mehrzweckchassis zu schaffen, das als Hohlplatte mit tragend und versteifend wirkenden inneren Streben ausgebildet ist und das den obengenannten Nachteil vermeidet. Das Chassis soll insbesondere eine optimale Übertragung von auf seinen mittleren Bereich ausgeübten Belastungen auf die Radachsen gewährleisten.

Auch bei grossen Belastungen und beim Einsatz im Gelände soll es eine grosse Stabilität, insbesondere auch gegen Verwindung, aufweisen und unter Vermeidung von Blattfedern und selbst unter Verwendung grosser Räder einen grossen Radeinschlag und eine sehr tiefgelegene Ladefläche erlauben. Es soll zusammen mit raumsparenden teleskopischen Achsaufhängungen verwendet werden können und damit neben den erwähnten Verstellmöglichkeiten auch den Aufbau schwerer Aggregate ermöglichen.

Diese Aufgabe wird durch die im kennzeichnenden Teil des Patentanspruch 1 genannten Merkmale gelöst.

Das Chassis ist weist eine sogenannte Kastenkonstruktion auf. Es besteht aus einer unteren und einer oberen Trägerplatte, die durch zwischen diesen liegende Versteifungselemente verstärkt und verbunden sind. Dieser Aufbau führt zu einer enormen Tragkraft und äusserst grosser Steifigkeit gegenüber Verwindung bei nur geringer Höhe des Chassis. Im Gegensatz zu herkömmlichen Chassiskonstruktionen mit einer Gesamthöhe von 30-40 cm sind hier minimale Höhen von ca. 10 cm möglich. Dies ermöglicht eine Verwendung im Zusammenhang mit Fahrzeugen, die grosse Lasten auch bei grösseren Geländeunebenheiten tragen und transportieren müssen. Das erfindungsgemässe Chassis ermöglicht Lenkwinkel von 45°, was gegenüber herkömmlichen Konstruktionen eine enorme Steigerung der Manövrierbarkeit bedeutet. Ein weiterer Vorteil besteht darin, dass die Anordnung der Versteifungselemente so erfolgen kann, dass das ganze Chassis, insbesondere auch die Randbereiche, eine grosse Festigkeit aufweist und hohen Belastungen ausgesetzt werden kann. Durch eine Abdeckung der Aussenfronten des Chassis mit vertikalen Abdeckungsplatten wird eine zusätzliche Versteifung bewirkt. Diese Massnahmen ermöglichen eine Formgebung, die auch bei der Verwendung grosser Räder ein sehr tiefe Lagerung des Chassis erlaubt und auch in dessen Randbereich eine Befestigung von schweren Bauelementen gestattet. Dank dem erfindungsgemässen Chassis wird es möglich, teleskopische Achsaufhängungen, wie sie beispielsweise in der Patentanmeldung Nr. 531/87 beschrieben sind, einzusetzen, was eine Verstellung der Fahrzeuglage auch während des Fahrens und ohne zusätzliche Einrichtungen ermöglicht. Ausserdem ergibt sich eine Bauweise mit einem verhältnismässig geringem Gewicht. Da das Chassis vorzugsweise rundherum geschlossen ist, weist es auch gegenüber äusseren Einflüssen eine grosse Widerstandsfestigkeit auf.

Anhand der nachfolgenden Figuren sind Ausführungsbeispiele der Erfindung näher erläutert.

Fig. 1 zeigt die Draufsicht eines erfindungsgemässen Ausführungsbeispiels eines Mehrzweckchassis mit Achsaufhängung und Rädern

Fig. 2 zeigt die Seitenansicht des Mehrzweckchassis gemäss Figur 1

Fig. 3 zeigt ein Ausführungsbeispiel eines Mehrzweckchassis mit einer Oeffnung im Mittenbereich und einem eingeschweissten, massiven Stahlring von oben und von der Seite

Fig. 4 zeigt eine Führerkabine, die an den Stirnseiten eines Chassis gemäss Fig. 1 befestigt werden kann

Fig. 5 zeigt ein Ausführungsbeispiel eines Verstärkungselementes im Querschnitt

Fig. 6 zeigt ein Ausführungsbeispiel eines Fahrzeuges mit einem erfindungsgemässen Chassis, angebau-

EP 0 312 556 B1

ter Führerkabine und einer Anhängevorrichtung

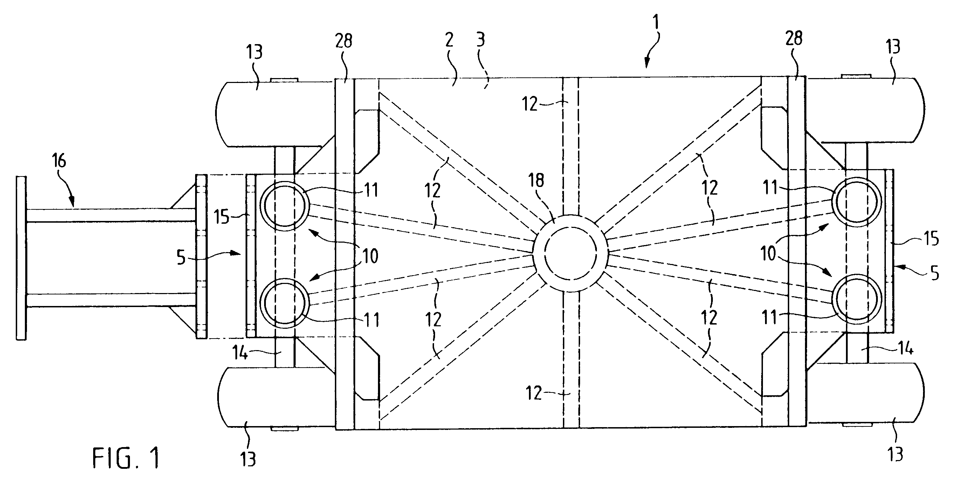

In Figur 1 ist ein Ausführungsbeispiel des erfindungsgemässen Mehrzweckchassis in der Ansicht von oben dargestellt. Die Plattform des Chassis wird durch eine untere und eine obere Trägerplatte 2, 3, zwischen denen Verstärkungen 12 liegen, gebildet. Damit übernimmt das erfindungsgemässe Chassis gleichzeitig die Funktion der Ladefläche, was sowohl zu einer Gewichts- als auch zu einer Platzersparnis führt. Gegenüber herkömmlichen Chassiskonstruktionen mit Gesamthöhen von 30 bis 40 cm können durch dieses neue Chassis mühelos Höhen von unter 20 cm bis hinunter zu ca. 10 cm erreicht werden. Dank der leichten, platzsparenden und insbesondere auch gegenüber während dem Fahren auftretenden Verwindungen robusten Bauweise des Chassis ist es möglich, teleskopische Achsaufhängungen 10, wie sie beispielsweise in der Patentanmeldung Nr. 531/87 beschrieben sind, zu verwenden. Mittels dieser teleskopischen Achsaufhängungen 10 mit federbeinähnlichen Achsführungselementen, die in Führungsrohren 11 geführt werden, sind die Achsen 14 aufgehängt. Auf diesen Achsen 14 sind Räder 13 gelagert. Die Verwendung von teleskopischen Federungen erlaubt die Anordnung dieser Vorrichtungen über der Ladefläche und ermöglicht so eine tiefe Lagerung des Chassis 1 bzw. der Ladefläche. Die durch eine harte Federung und den geringen Federweg bedingten hohen Belastungen können wegen der enorm stabilen Bauweise des erfindungsgemässen Chassis aufgenommen werden. Die Führungsrohre 11 sind jeweils fest mit dem Chassis 1 verbunden und ragen senkrecht oder annähernd senkrecht nach oben. Da bei schweren Fahrzeugen insbesondere beim Bremsen und Anfahren grosse Beschleunigungskräfte auf die Achsaufhängungen wirken, dienen die Führungsrohre 11 gleichzeitig einer Stabilisierung gegenüber solchen Belastungen.

Die Verwendung einer solchen Achsaufhängung erlaubt ohne zusätzliche Elemente eine Federung des Fahrzeuges, eine Anpassung der Hangverneigung, eine Höhenverstellung und eine Waagrechtnivellierung.

Die notwendige Stabilität des Chassis wird durch mehrere Verstärkungsprofile 12, die zwischen den beiden Trägerplatten 2, 3 verlaufen, erreicht. Diese Verstärkungsprofile 12 führen ausgehend von einem zentralen Stahlring 18 im Mittenbereich des Chassis sternförmig gegen den Randbereich des Chassis. Sowohl die Verstärkungen 12 als auch der Stahlring 18 sind mit den beiden Trägerplatten 2, 3 verschweisst. Gegen die vordere und hintere Stirnseite 5 ist das Chassis 1 in der Breite verjüngt, so dass für die grossen Räder 13 ein genügend grosser Schwenk- und Lenkbereich vorhanden ist. Im Gegensatz zu herkömmlichen Chassis mit konventionellen Leiterrahmen und Blattaufhängungen drehen bei diesem Plattformchassis die grossen Räder unter der Plattform durch. Um einen noch grösseren Federhub zu erreichen, wird jedoch die erwähnte Verjüngung vorgesehen. Alle Räder können so, auch bei grossen Federhüben, bis ca. 45° eingeschwenkt werden. Da die Verstärkungen 12 bis gegen die Stirnseiten 5 geführt sind, weist das Chassis 1 auch in diesen Bereichen eine genügend hohe Festigkeit auf. Ausserdem werden durch diese Anordnung der Verstärkungen 12 die Belastungen, die gewöhnlich hauptsächlich im Bereich der Chassis-Mitte erfolgen, optimal auf die Achsaufhängung und Räder übertragen. Um die auf der Ladefläche ruhende Last möglichst gleichförmig auf das ganze Chassis zu verteilen und um eine optimale Lastübertragung auf die Radachsen zu erreichen, sind von den sternförmig nach aussen verlaufenden Verstärkungen 12, jeweils ausgehend vom Stahlring 18 und mit diesem fest verbunden, vier Verstärkungen in diagonaler Richtung, zwei quer zum Chassis und vier zu den Führungsrohren 11 laufend angeordnet, wobei letztere fest mit diesen Führungsrohren 11 verbunden sind.

Vorzugsweise sind an den Stirnseiten 5 des Chassis 1 je Frontplatten 15 senkrecht oder unter einem kleinen Winkel bezüglich den Trägerplattenebenen angebracht. An diese kann beispielsweise ein Motoraufbaurahmen 16 angeschraubt werden. In ähnlicher Weise können an diesen Platten 15 andere Vorrichtungen, wie beispielsweise Führerkabinen, Anhängevorrichtungen etc., befestigt oder angekoppelt werden. Diese Konzeption erlaubt eine Verwendung des Chassis sowohl als selbstfahrendes Fahrzeug mit eigenem Motor-Aggregat als auch als Anhänger. In Kombination ist eine Verwendung als Anhängerzug möglich, d.h. als Zugfahrzeug mit einem Anhänger.

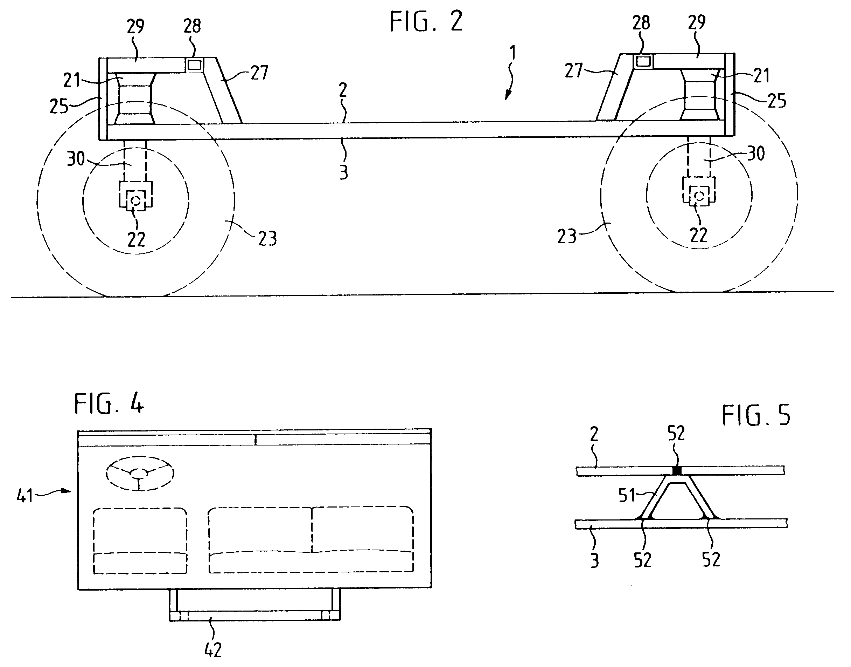

Figur 2 zeigt die Seitenansicht eines solchen Chassis. Die gestrichelten Linien deuten die Räder 23, die Achsen 22 und Federbeine 30 an. Die Führungsrohre 21 für die Federaufhängung sind senkrecht an das Chassis angeschweisst. Da wie schon erwähnt auf diese Führungsrohre 21 beim Bremsen oder Anfahren enorme Kräfte einwirken, sind sie mittels über dem Chassis 1 liegenden Stützkonstruktionen 27, 28, 29 abgestützt. Durch diese Stützkonstruktionen wird gewährleistet, dass die bei diesen Belastungen auftretenden Kräfte gleichmässig auf das Chassis übertragen werden.

Diese Stützkonstruktionen bestehen je aus einer starren Platte 29, zwei seitlichen, schrägen Platten 27 und einem Uebergangsstück 28. Das stirnseitige Ende der Platten 29 stützt gleichzeitig die beiden Frontplatten 25 ab, die senkrecht an der Chassis-Stirnseite befestigt sind. Diese Stützkonstruktionen 27, 28, 29 stabilisieren die Führungsrohre 21 und dienen gleichzeitig der Lastübertragung von der durch das Chassis 1 gebildeten Plattform auf die Elemente der Achsaufhängung. Die Platten 27, 29 sind wie aus Figur 1 ersichtlich ist, so geformt, dass die Räder 23 beim Einschwenken und Lenken nicht behindert werden. Das Uebergangsstück 28 besteht aus einem Vierkantrohr, das die Platten untereinander verbindet und die von den Führungsrohren

3

11 ausgehenden Kräfte von der Platte 29 auf die Platten 27 und das Chassis 1 überträgt. Da auch auf diese Stützkonstruktion grosse Kräfte einwirken, werden die Platten 27, 29 vorzugsweise ebenfalls in einer starren Kastenkonstruktion gebaut.

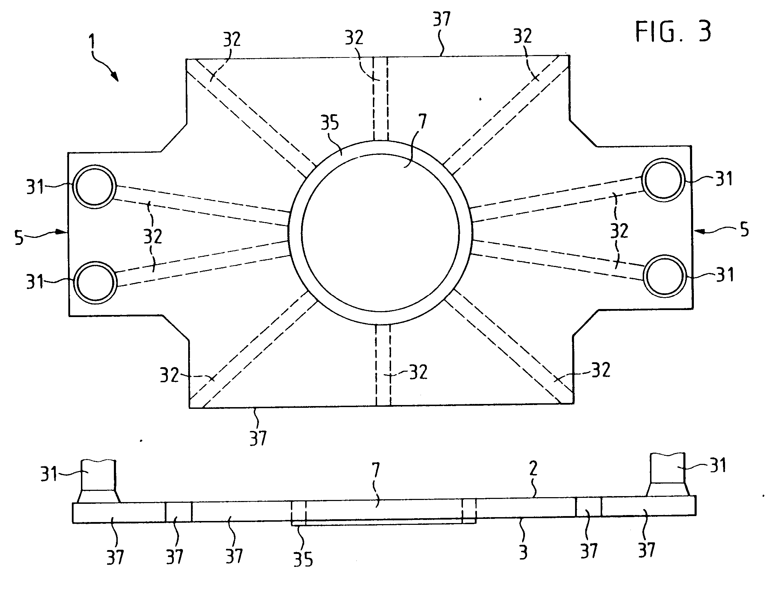

Fig. 3 zeigt ein Ausführungsbeispiel eines erfindungsgemässen Chassis mit einem im Zentrum plazierten Stahlring 35 von oben und von der Seite. Dieser Stahlring 35 dient der Montage eines nicht näher dargestellten Drehkranzes oder Drehschemmels auf das Chassis 1. Solche Drehkränze werden insbesondere bei Waffenträgerfahrzeugen und für mobile Radarstationen eingesetzt. Die beiden Trägerplatten 2, 3 weisen entsprechende Oeffnungen 7 auf, die durch diesen Stahlring 35 begrenzt werden. Damit ist für spezielle Aufbauten mit Drehverteilern und anderen Aggregaten der Durchgang nach unten gewährleistet. Für andere Zwecke kann die Oeffnung, falls nötig, mittels einem Deckel überdeckt oder geschlossen werden. Gleichzeitig bewirkt dieser Stahlring 35 eine Versteifung in dem Mittenbereich des Chassis 1. An den Chassis-Stirnseiten sind wiederum Führungsrohre 31 für die Federaufhängung der Achse an der oberen Trägerplatte 2 angeschweisst. Zwischen den Trägerplatten 2, 3 verlaufen die Verstärkungen 32 ausgehend vom Stahlring 35 sternförmig nach aussen.

Die Aussenseiten des Chassis 1 sind durch schmale Abdeckplatten 37, die mit den Trägerplatten 2, 3 verbunden sind, abgedeckt, so dass der Hohlraum zwischen den beiden Trägerplatten 2, 3 rundherum geschlossen ist. Dadurch wird die Randzone des Chassis verstärkt und gleichzeitig das Innere des Chassis gegen Korrosion geschützt.

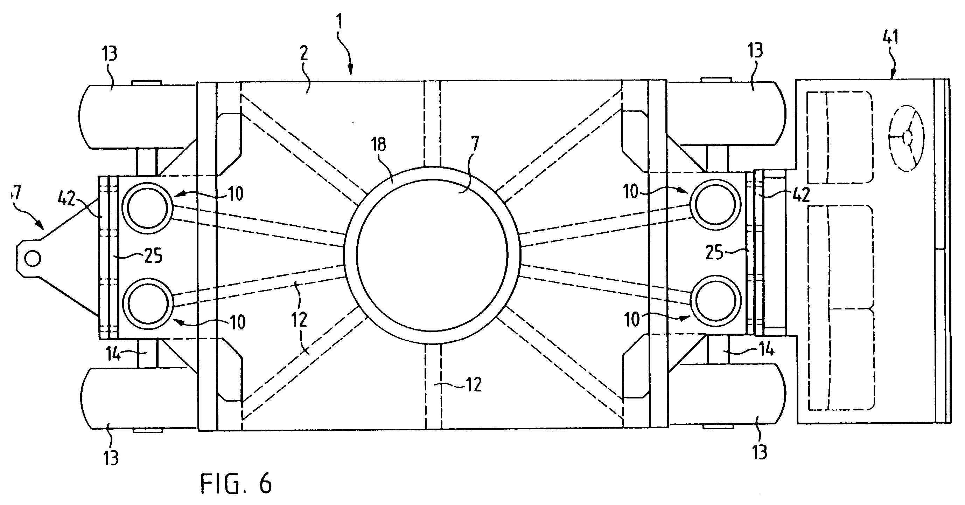

Figur 4 zeigt schematisch eine Führerkabine 41 mit einer Linkslenkung und zwei Beifahrersitzen. Mittels einer Befestigungsvorrichtung 42 kann die Führerkabine 41 an einer der senkrechten Frontplatten 25 (Fig. 2) vorne oder hinten am Chassis 1 befestigt werden. Vorzugsweise wird diese Befestigungsvorrichtung durch eine Stahlplatte gebildet, die mit der entsprechenden Frontplatte 25 verschraubt wird.

In Figur 5 ist ein Ausführungsbeispiel einer zwischen den Trägerplatten 2, 3 liegenden Verstärkung 51 im Querschnitt dargestellt. Die Verstärkungen 51 tragen einen wesentlichen Teil zu der Stabilität des Chassis bei und verhindern insbesondere eine Verwindung von diesem beim Befahren von unebenen Gelände. Um eine genügende Starrheit dieser Verstärkungen 51 zu erreichen, werden diese im Querschnitt V-förmig ausgebildet. Mittels Schweissnähten 52 sind die Verstärkungen 51 mit den Trägerplatten 2, 3 verbunden. Diese Schweissverbindungen 52 bewirken eine homogene, steife und unverwindbare Verbindung der Trägerplatten 2, 3 und der Verstärkungen 51.

Ein Fahrzeug mit einem erfindungsgemässen Chassis 1, einer Führerkabine 41 und einer Anhängevorrichtung 47 ist beispielsweise in Figur 6 dargestellt. Sowohl die Führerkabine als auch die Anhängevorrichtung 47 weisen eine Befestigungsvorrichtung 42 mit einer senkrechten Stahlplatte auf, die je mit der entsprechenden Frontplatte 25 verschraubt sind. Vorzugsweise wird anstelle einer Anhängevorrichtung ein Motorträgerrahmen 16 (Fig. 1) mit der entsprechenden Frontplatte 25 verbunden, auf welchem der Motor und weitere Elemente zur Kraftübertragung auf den Antrieb montiert sind. Wird wie in Figur 6 dargestellt eine Anhängevorrichtung 47 verwendet, so kann beispielsweise auch ein zweite Fahrzeugeinheit mit einer Antriebseinrichtung angekoppelt sein, die beide Fahrzeuge antreibt. Bei einer solchen Version bilden die beiden Fahrzeuge hintereinander eine Einheit, bzw. ein Fahrzeug mit vier Achsen und doppelter Tragfähigkeit.

Da das erfindungsgemässe Mehrzweckchassis einen symmetrischen Aufbau aufweist, ist es insbesondere auch geeignet für Fahrzeuge, welche in beiden Fahrtrichtungen eingesetzt werden sollen. Dabei werden beide Radachsen lenkbar über die Achsaufhängung am Chassis montiert oder die Räder können gegenüber der Achse verschwenkt werden. Das Chassis ist an den Stirnseiten 5 so verjüngt, dass beide Achsen geschwenkt bzw. die Räder eingeschlagen werden können. Die Lenkung eines solchen Fahrzeuges erfolgt wahlweise über eine einzelne, parallele oder gegensinnige Lenkung der Achsen bzw. Räder.

Wie oben beschrieben wurde, werden die im Querschnitt V-förmigen Verstärkungen 12, 32, 51 vorzugsweise sternförmig ausgehend vom Mittenbereich des Chassis angeordnet. Bei speziellen Verwendungen mit anderen Belastungen können andere Querschnitte der Verstärkungen oder eine problemspezifische Anordnung von diesen Verstärkungen 12, 32, 51 erforderlich sein. Beispielsweise können auch Doppel-T-Profile eingesetzt werden, wobei deren Steg parallel zu den Trägerplattenebenen liegt und die Gurte je mit beiden Trägerplatten 2, 3 verschweisst sind.

Selbstverständlich kann anstelle eines zentralen Stahlringes 18, 35 auch ein anderes Verstärkungselement verwendet werden oder dieser ganz beiseite gelassen werden.

Obwohl das Chassis durch seine Bauweise optimal für den Einsatz mit teleskopischen Achsaufhängungen geeignet ist, kommen natürlich auch andere Federaufhängungen oder Achsbefestigungen in Frage.

## Patentansprüche

1. Fahrzeugrahmen für Nutz- und Spezialfahrzeuge, wie Waffenträgerfahrzeuge, Radarstationen, Autokräne, der eine obere und eine untere Trägerplatte (2,3) aufweist, die durch mehrere zwischen diesen verlaufende Verstärkungen (12, 32, 51) miteinander verbunden sind, wobei diese Verstärkungen einen Querschnitt aufweisen, der sowohl eine tragende als auch eine stabilisierende Wirkung der Verstärkungen (12, 32, 51) gewährleistet, **dadurch gekennzeichnet,** dass die Verstärkungen (12, 32, 51) vom Mittenbereich sternförmig gegen den Rand des Fahrzeugrahmens verlaufen.

2. Mehrzweckchassis gemäss Anspruch 1, dadurch gekennzeichnet, dass die obere und untere Trägerplatte (2, 3) an ihrem Rand durch Abdeckplatten (37) miteinander verbunden sind, so dass der Zwischenraum gegenüber der Umgebung abgeschlossen ist.

3. Mehrzweckchassis gemäss einem der Ansprüche 1 oder 2, dadurch gekennzeichnet, dass die obere und untere Trägerplatte (2, 3) je an ihren beiden Stirnseiten (5) in der Breite verjüngt sind, so dass die Räder (13) eines Fahrzeuges mit einem erfindungsgemässen Mehrzweckchassis im eingeschwenkten Zustand einen Freiraum gegenüber dem Chassis (1) aufweisen.

4. Mehrzweckchassis gemäss einem der Ansprüche 1 bis 3, dadurch gekennzeichnet, dass im Bereich der Stirnseiten (5) des Chassis (1) je zwei Führungsrohre (11, 21, 31) zur Aufnahme einer federbeinähnlichen Achsaufhängung an der oberen Trägerplatte (2) befestigt sind, wobei die Längsachsen dieser Führungsrohre mindestens annähernd senkrecht zum Chassis (1) stehen.

5. Mehrzweckchassis gemäss einem der Ansprüche 1 bis 4, dadurch gekennzeichnet, dass die Führungsrohre (11, 21, 31) an ihren freien Enden mittels Stützkonstruktionen (27, 28, 29) stabilisiert und mit dem Chassis (1) verbunden und gegen letzteres abgestützt sind.

6. Mehrzweckchassis gemäss einem der Ansprüche 1 bis 5, dadurch gekennzeichnet, dass das Chassis (1) in seinem Mittenbereich einen Stahlring (18) aufweist, welcher mit den beiden Trägerplatten (2, 3) verschweisst und mit den Verstärkungen (12, 32, 51) fest verbunden ist.

7. Mehrzweckchassis gemäss einem der Ansprüche 1 bis 6, dadurch gekennzeichnet, dass die beiden Trägerplatten (2, 3) in ihrem Mittenbereich je eine Oeffnung aufweisen, die durch einen Stahlring (35) begrenzt sind, wobei der Durchmesser des Stahlringes bzw. der Oeffnungen (7) so gross ist, dass ein Drehkranz oder Drehschemmel aufmontiert werden kann und die Oeffnungen (7) der Durchführung von Aggregaten oder Drehverteilern dienen.

8. Mehrzweckchassis gemäss einem der Ansprüche 6 bis 7, dadurch gekennzeichnet, dass von den sternförmig verlaufenden Verstärkungen (12, 32, 51), jeweils ausgehend vom Stahlring (18, 35) und mit diesem fest verbunden vier Verstärkungen in diagonaler Richtung, zwei quer zum Chassis (1) und vier zu den Führungsrohren (11, 21, 31) verlaufen, wobei letztere fest mit den Führungsrohren verbunden sind.

9. Mehrzweckchassis gemäss einem der Ansprüche 1 bis 8, dadurch gekennzeichnet, dass an den beiden Stirnseiten (5) des Chassis (1) je Befestigungselemente (15, 25) fest mit dem Chassis verbunden sind, die der Ankoppelung von Hilfsvorrichtungen wie Motorträgern, Führerkabinen, Anhängevorrichtungen etc. dienen.

10. Verwendung des Mehrzweckchassis gemäss Anspruch 1 für ein Nutz- oder Spezialfahrzeug, das in beide Fahrtrichtungen eingesetzt werden kann.

## Claims

1. Vehicle frame for useful and special vehicles, such as weapon carrier vehicles, radar stations and mobile cranes, which has an upper and a lower carrier plate (2, 3), which are interconnected by several reinforcements (12, 32, 51) located between then and which have a cross-section ensuring both a carrying and stabilizing action of the reinforcements (12, 32, 51), characterized in that the reinforcements (12, 32, 51) pass radially from the central area towards the edge of the vehicle frame.

2. Multipurpose chassis according to claim 1, characterized in that the upper and lower carrier plate (2, 3) are interconnected at the edge by cover plates (37), so that the gap is sealed with respect to the surrounding area.

3. Multipurpose chassis according to one of the claims 1 or 2, characterized in that the upper and lower carrier plates (2, 3) are in each case tapered at their two front faces (5), so that the wheels (13) of a vehicle with an inventive multipurpose chassis in the swung in state has a free space with respect to the said chassis (1).

4. Multipurpose chassis according to one of the claims 1 to 3, characterized in that in the vicinity of the front faces (5) of the chassis (1) are in each case fixed to the carrier plate (2) two guide tubes (11, 21, 31) for receiving a spring leg-like axle suspension, the longitudinal axes of said guide tubes being at least approximately at right angles to the chassis (1).

5. Multipurpose chassis according to one of the claims 1 to 4, characterized in that the free ends of the guide tubes (11, 21, 31) are stabilized by means of support structure (27, 28, 29), are connected to the chassis (1) and are braced against the latter.

6. Multipurpose chassis according to one of the claims 1 to 5, characterized in that in its central area the chassis (1) has a steel ring (18) which is welded to the two carrier plates (2, 3) and fixed to the reinforcements (12, 32, 51).

7. Multipurpose chassis according to one of the claims 1 to 6, characterized in that in their central area the two carrier plates (2, 3) have an opening, which is bounded by a steel ring (35), the diameter of the steel ring or the openings (7) being sufficiently large for a slewing track ring or pivoted bogie to be fitted and the openings (7) are used for the passage of units or rotation distributors.

8. Multipurpose chassis according to one of the claim 6 to 7, characterized in that form the radially directed reinforcements (12, 32, 51) and in each case emanating from the steel ring (18, 35) and being fixed thereto, pass diagonally four reinforcements, two of which are at right angles to the chassis (1) and two to the guide tubes (11, 21, 31) and the latter are fixed to said guide tubes.

9. Multipurpose chassis according to one of the claims 1 to 8, characterized in that on both front faces (5) of the chassis (1) fixing elements (15, 25) are connected to the chassis and are used for coupling auxiliary means such as engine mountings, driver's cabs, trailers, etc.

10. Use of the multipurpose chassis according to claim 1 for a commercial or special vehicle, which can be used in both directions of travel.


**Revendications**

1. Châssis de véhicule, pour véhicules utilitaires et spéciaux comme les véhicules vecteurs d'armes, les stations radar, les grues automobiles, qui présente une plaque support supérieure et une plaque support inférieure (2,3) qui sont reliées l'une à l'autre par plusieurs renforts (12,32,51) s'étendant entre ces plaques, ces renforts présentant une section transversale qui confère aux renforts (12,32,51) un effet de support ainsi qu'un effet de renforcement, caractérisé en ce que les renforts (12,32,51) s'étendent en étoile de la région centrale vers la périphérie du châssis du véhicule.

2. Châssis polyvalent selon la revendication 1, caractérisé en ce que le long de leur périphérie, les plaques supports supérieure et inférieure (2,3) sont reliées l'une à l'autre par des plaques de fermeture (37), de sorte que l'espace intercalaire est isolé de l'environnement.

3. Châssis polyvalent selon une des revendications 1 et 2, caractérisé en ce que les plaques supérieure et inférieure (2,3) sont rétrécies en largeur au droit de leurs deux bords frontaux (5) de sorte que les roues (13) d'un véhicule équipé d'un châssis polyvalent selon l'invention présentent un dégagement par rapport au châssis (1) dans la position braquée.

4. Châssis polyvalent selon une des revendications 1 à 3, caractérisé en ce que dans la région de chacun des deux bords frontaux (5) du châssis (1), sont fixés deux tubes de guidage (11,21,31) qui reçoivent une suspension d'essieu du type jambe élastique, qui est liée à la plaque support supérieure (2), les axes longitudinaux de ces tubes de guidage étant au moins approximativement perpendiculaires au châssis (1).

5. Châssis polyvalent selon une des revendications 1 à 4, caractérisé en ce qu'à leurs extrémités libres, les tubes de guidage (11,21,31) sont contreventés, reliés au châssis (1) et étayés par rapport à ce dernier, à l'aide de contreforts (27,28,29).

6. Châssis polyvalent selon une des revendications 1 à 5, caractérisé en ce que, dans sa région centrale, le châssis (1) présente un anneau en acier (18) qui est soudé au deux plaques supports (2,3) et assemblé rigidement aux renforts (12,32,51).

7. Châssis polyvalent selon une des revendications 1 à 6, caractérisé en ce que les deux plaques supports (2,3) présentent, chacune dans sa région centrale, une ouverture qui est limitée par un anneau en acier (35), le diamètre de l'anneau en acier ou des ouvertures (7) étant suffisamment grand pour qu'on puisse y monter une couronne de pivotement ou une traverse pivotante, et les ouvertures (7) servent à donner passage à des appareils ou à des distributeurs tournants.

8. Châssis polyvalent selon une des revendications 6 et 7, caractérisé en ce que, parmi les renforts (12,32,51) s'étendant en étoile, qui prennent naissance sur l'anneau en acier (18,35) et sont fixés rigidement à cet anneau, quatre renforts s'étendent dans des directions diagonales, deux s'étendent transversalement au châssis (1) et quatre rejoignent les tubes de guidage (11,21,31), ces derniers étant assemblés rigidement aux tubes de guidage.

9. Châssis polyvalent selon une des revendications 1 à 8, caractérisé en ce qu'aux deux bords frontaux (5) du châssis (1), sont fixés des éléments de fixation (15,25) assemblés rigidement au châssis et qui servent à accoupler des dispositifs auxiliaires tels que des supports de moteurs, des cabines de conducteurs, des dispositifs d'attelage, etc.

10. Utilisation du châssis polyvalent selon la revendications 1 pour un véhicule utilitaire ou spécial qui peut être conduit dans les deux sens de marche.

FIG. 1

EP 0 312 556 B1

FIG. 2

FIG. 4

FIG. 5

EP 0 312 556 B1

FIG. 3

EP 0 312 556 B1

FIG. 6